# EUROPEAN PATENT APPLICATION

(11) **EP 1 816 867 A1**
(43) Date of publication of application: **08.08.2007**
(21) Application number: 06741959.8
(22) Date of filing: 23.05.2006
(51) Int. Cl.: H04N 7/14

(54) **METHOD AND SYSTEM FOR REALIZING SYNCHRONIZATION BETWEEN RECEIVER AND SOURCE OF BROADCASTING TV SERVICE**

(30) Priority: 23.05.2005 CN 200510071167
(71) Applicant: Huawei Technologies Co., Ltd., Longgang District Shenzhen Guangdong 518129 (CN)
(72) Inventor: WU, Gengshi, Huawei Administration Building, Shenzhen, Guangdong 518129 (CN); MO, Zhiwei, Huawei Administration Building, Shenzhen, Guangdong 518129 (CN); LIU, Yu, Huawei Administration Building, Shenzhen, Guangdong 518129 (CN); CHU, Qing, Huawei Administration Building, Shenzhen, Guangdong 518129 (CN)
(74) Representative: Viering, Jentschura & Partner
(86) International application number: PCT/CN2006/001071
(87) International publication number: WO 2006/125385

(57) **Abstract**

A method and system for implementing synchronization between a receiving end and a source end of broadcast television service. The method includes: determining, at a transmitting station, time difference information between the source end and the transmitting station; and transmitting, by the transmitting station, time information of the transmitting station and the time difference information to the receiving end; implementing, by the receiving end, synchronization between the receiving end and the source end according to the time difference information and the time information of the transmitting station. With the method, synchronization between the source end and the receiving end in a broadcast television service network may be realized so that the receiving end may learn the accurate initial time information for receiving program streams transmitted from the program source. With the method, energy waste due to in-advance turn-on of receiving end device for receiving a program may be avoided.

## Description

### Field of the Invention

The present invention relates to the field of broadcast television communication technology, and particularly to a method and a system for implementing synchronization between a receiving end and a source end of a broadcast television service.

### Background of the Invention

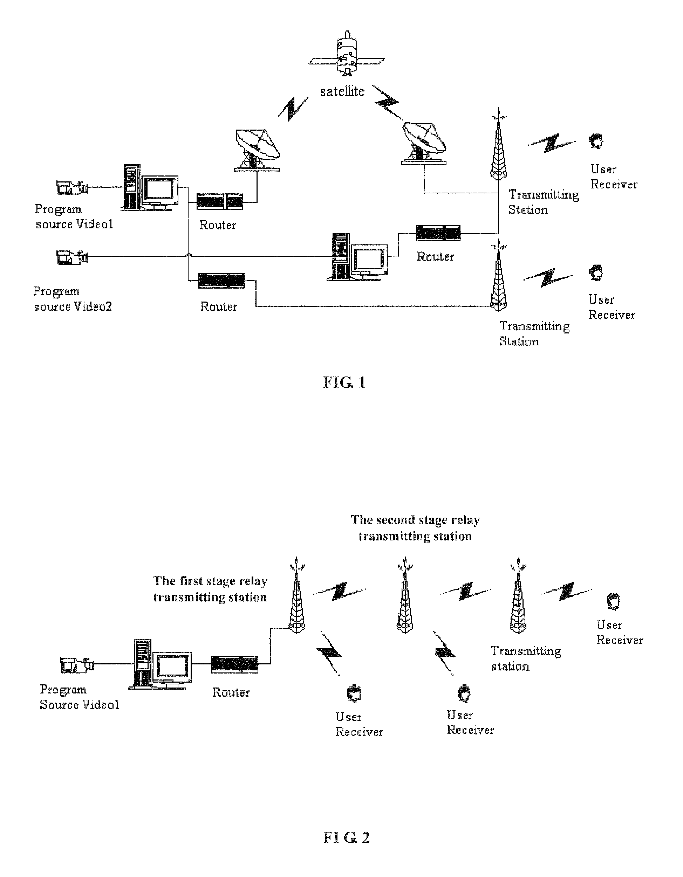

The network structure of a broadcast television service is as shown in FIG. 1, which includes a program source, a transmitting station and a receiving end (i.e. a user end). The broadcast television service transmitted by the program source is transmitted to the user end by the transmitting station. In this way, the broadcast television service is implemented. The broadcast television signals are transmitted by the radio transmitting station (or other type of transmitting station) to the receiving end, in which each carrier may transmit the digital television signals from multiple program sources, such as, the program sources Video and Video2.

However, in a conventional broadcast television service network, the clock of a program source and that of a transmitting station are not synchronous. Referring to FIG. 1, a program from a program source Video 1 is transmitted via satellite, while a program from a program source Video2 is transmitted only through a local switching network. In this way, the absolute arrival time of a program from one program source differs from that of a program from the other program source by several minutes, or even tens of minutes. However, the user of the receiving end may not learn the time difference resulted from transmission paths and the actual time information of the program sources. So, the user may not learn the accurate time of a program transmitted from a program source.

During the practical process for receiving a broadcast television service, if the user customized an 8:00 o'clock program of Videol, he has to know the time information of the program source Video 1 in order to receive this program at the accurate time. Otherwise, the user has to receive the program a short time ahead of the schedule so as not to miss anything in the program. This will bring inconvenience to the user.

The conventional method for solving the above-mentioned problem is to synchronize the radio transmitting station and the program source, which is as follows: the program source is first informed of the current time of the transmitting station so that the program source may transmit the programs to the transmitting station a certain time ahead of the schedule, and the transmitting station buffers all received broadcast television programs for a certain time with a relatively large buffer, and transmits the programs based on the standard time.

However, the programs of the program source may be transmitted by multiple transmitting stations, and the program lists (i.e. program tables) for the multiple transmitting stations may be the same. But the time differences between the program source and the multiple transmitting stations are different. This requires the program source to know, in advance, the absolute times for its program signals or data to arrive at the multiple transmitting stations, and determine a relatively reasonable program list according to these absolute times. For example, if the time difference between one transmitting station and the program source is 20 minutes and the time difference between another transmitting station and the program source is 1 second, the program source should determine the program list based on the transmitting station which has the largest time difference with the program source, and configure a corresponding buffer memory for the transmitting station. This will result in a very complicated implementation.

Furthermore, considering the situation that the transmitting station is likely to be relayed and not all the transmitting stations are synchronous, the program source cannot learn, in fact, the absolute time information of all the transmitting stations which participate in the transmission of a program, so it is very likely that the above-mentioned method may not be applicable in actual applications, or even if the method is applicable, it will be impossible to implement the synchronization between the program source and the receiving end.

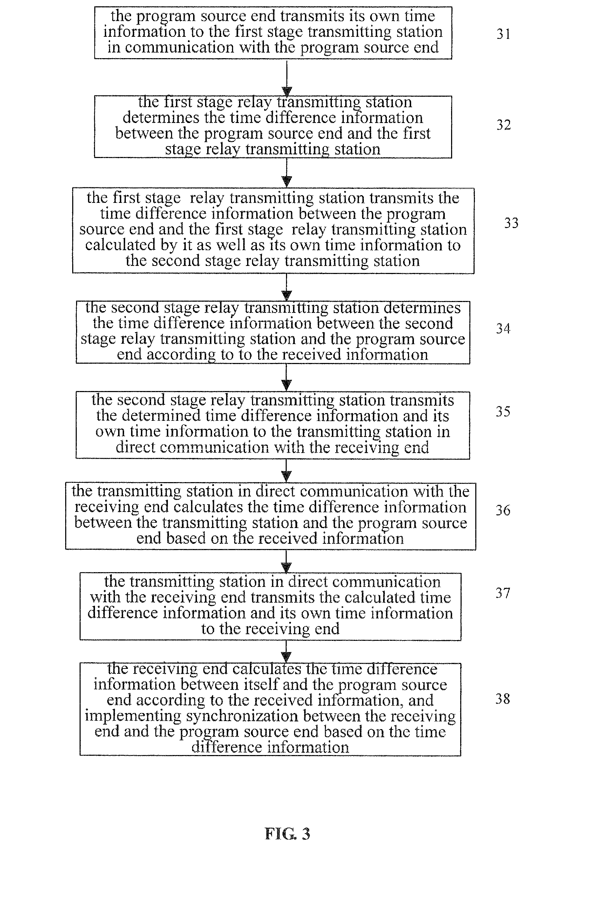

As shown in FIG.2, the programs from the program source Video are transmitted to the user via two radio relays, in which each of the radio relay transmitting stations provides broadcast television service for the user. In the case of applying the above-mentioned method, it is necessary for the program source to know the absolute time of each of the relay transmitting stations, it is also necessary for each of the relay transmitting stations to know the number of relay stations behind it, as well as the direct timing relationship between them, so as to determine the time table of the program source and the synchronization relationship with the program source. Moreover, in the case of adding a relay station, it is necessary to recalibrate and modify the time for transmitting a program on the transmitting station relay link. The complexity for implementing the method in such a case may well be imagined.

In addition, considering the stability of the crystal oscillator in each device, it may be necessary to use a GPS (Global Position System) or other methods to calibrate the frequency of the crystal oscillator so as to keep the crystal oscillator to be stable in a long term. Accordingly, this may further increase the complexity for implementing the method.

### Summary of the Invention

In view of the above, the present invention is to provide a method and a system for implementing synchronization between a receiving end and a source end of a broadcast television service, which provides a relatively simple technical solution to solve the problem of synchronization between the receiving/transmitting of the broadcast television service.

The present invention provides the following technical solution:

The present invention provides a method for implementing synchronization between a receiving end and a source end of a service, a service transmission network in which the method is applied includes the source end, a relay transmitting end and the receiving end, the method includes:
determining, at the relay transmitting end, time difference information between the source end and the relay transmitting end;
transmitting, by the relay transmitting end, time information of the relay transmitting end and the time difference information to the receiving end;
implementing, by the receiving end, synchronization between the receiving end and the source end according to the time difference information and the time information of the relay transmitting end.

Alternatively, when the relay transmitting end includes two or more relay transmitting ends, each of the relay transmitting ends which are not in direct communication with the service receiving end needs to determine the time difference information between itself and the source end, according to time information and time difference information transmitted from a last stage relay transmitting end.

The present invention provides a method for implementing synchronization between a receiving end and a source end of a broadcast television service, a broadcast television service transmission network in which the method is applied includes the program source end, a transmitting station and the receiving end, wherein the method includes:
A. determining time difference information between the program source end and the transmitting station;
B. transmitting, by the transmitting station, time information of the transmitting station and the time difference information to the receiving end;
C. implementing, by the receiving end, synchronization between the receiving end and the program source end according to the time difference information and the time information of the transmitting station.

Alternatively, the step A may include:
al. transmitting, by the program source end, time information of the program source end to the transmitting station;
a2. calculating, by the transmitting station, the time difference information between the transmitting station and the program source end according to the time information of the program source end.

Alternatively, the transmitting station may be in direct communication with the receiving end.

Alternatively, the program source end communicates with the transmitting station via at least one relay station.

Alternatively, the step of determining time difference information between the program source end and the transmitting station includes:
transmitting, by the program source end, time information of the program source end to the relay station;
calculating, by the relay station, time difference information between the relay station and the program source end according to the time information of the program source end;
transmitting, by the relay station, the time difference information between the relay station and the program source end as well as the time information of the relay station to the transmitting station in direct communication with the receiving end;
calculating, by the transmitting station in direct communication with the receiving end, the time difference information between the program source end and the transmitting station according to the received time difference information between the relay station and the program source end and the time information of the relay station.

Alternatively, the program source end communicates with the transmitting station via multiple stages of relay stations, and determining the time difference information between the program source end and the transmitting station includes:
transmitting, by the program source end, time information of the program source end to a first stage relay station;
calculating, by the first stage relay station, time difference information between the first stage relay station and the program source end according to the time information of the program source end;
transmitting, by the first stage relay station, the time difference information between the first stage relay station and the program source end and time information of the first stage relay station to a second stage relay station, and calculating, by the second stage relay station, time difference information between the second stage relay station and the program source end according to the time difference information between the first stage relay station and the program source end and the time information of the first stage relay station, and repeating the transmitting and calculating steps for the rest stages of relay stations;
calculating, by the transmitting station in direct communication with the receiving end, the time difference information between the program source end and the transmitting station according to received time difference information between a relay station connected with the transmitting station and the program source, as well as the time information of the relay station.

Alternatively, determining the time difference information between the program source end and the transmitting station includes:
transmitting, by the program source end, time information of the program source end to the transmitting end in direct communication with the receiving end or a relay station by way of broadcasting or a predetermined transmitting approach periodically;
carrying, by the relay station or the transmitting station, time difference information between the relay station or the transmitting station and the program source end as well as time information of the relay station or the transmitting station in a frame or super frame to be transmitted, and transmitting the frame or super frames to a relay station, the transmitting station in direct communication with the receiving end or the receiving end.

The time difference information may be carried in different frames or super frames respectively.

Preferably, the program source end transmits a program list containing program names and corresponding broadcasting time information to the transmitting station in direct communication with the receiving end or the relay station periodically.

Preferably, the method also includes:
the time information transmitted from the program source end to the transmitting station in direct communication with the receiving end or a relay station, as well as the time information transmitted from the transmitting station to the receiving end includes:
   time information of current year, month, day, minute and second of the program source end or the transmitting station, or part of the time information of current year, month, source end or the transmitting station, or part of the time information of current year, month, day, minute and second.

Preferably, the step C includes:
c1. calculating, by the receiving end, time difference information between the transmitting station and the receiving end according to the time information of the transmitting station;
c2, determining time difference information between the receiving end and the program source end according to the calculated time difference information between the receiving end and the transmitting station, as well as the time difference information between the program source end and the transmitting station;
c3. receiving broadcast television service information transmitted from the program source end according to the time difference information between the receiving end and the program source end.

A program source according to an embodiment of the present invention includes:
a time information transmitting module which is adapted to transmit current time information of the program source to each transmitting station periodically.

A transmitting station according to an embodiment of the present invention, includes:
a time difference information calculating module which is adapted to calculate time difference information between a program source and the transmitting station based on time information or time difference information transmitted from the program source or a relay station;
an information transmitting module which is adapted to transmit current time information of the transmitting station and the time difference information calculated by the time difference information calculating module to other transmitting station or a receiving end.

A receiving end device according to an embodiment of the present invention, includes:
a synchronization information obtaining module which is adapted to calculate and determine time difference information between a program source and the receiving end, based on time difference information between the program source and a transmitting station, as well as time information of the transmitting station;
a synchronous receiving and processing module which is adapted to determine time of the receiving end for receiving a broadcast television service transmitted by the program source based on the time difference information between the program source and the receiving end determined by the synchronization information getting module.

The present invention provides a system for broadcast television service with a receiving end and a source end, wherein the receiving end and the source end are synchronous with each other, the system includes the source end, a transmitting station and the receiving end,
the source end includes:
a time information transmitting module which is adapted to transmit current time information of the source end to the transmitting station periodically;
the transmitting station includes:
   a time difference information calculating module which is adapted to calculate time difference information between the source end and the transmitting station based on time information or time difference information transmitted from the source end or a relay station;
   an information transmitting module which is adapted to transmit current time information of the transmitting station and the time difference information calculated by the time difference information calculating module to other transmitting station or the receiving end;
   the receiving end includes:
      a synchronization information obtaining module which is adapted to calculate and determine time difference information between the source end and the receiving end, based on time difference information between the source end and the transmitting station, as well as time information of the transmitting station;
      a synchronous receiving and processing module which is adapted to determine time of the receiving end for receiving a broadcast television service transmitted by the source end based on the time difference information between the source end and the receiving end determined by the synchronization information getting module.

As can be seen from the above solutions, with the method according to the embodiments of the present invention, synchronization between the program source end and the receiving end in a broadcast television service network may be realized so that the receiving end may learn the accurate initial time information for receiving the program streams transmitted from the program source. Compared with the prior art, the method according to the embodiments of the present invention is simpler and easier to implement and more convenient to operate. With the method according to the embodiments of the present invention, energy waste due to in-advance turn-on of the receiving end device for receiving a program may be avoided.

### Brief Description of the Drawings

FIG. 1 is a schematic diagram illustrating the networking structure of a conventional broadcast television service network;

FIG. 2 is a schematic diagram illustrating the structure of a broadcast television service transport network with multiple relays;

FIG.3 is a flow chat illustrating a method according to an embodiment of the present invention;

FIG.4 is a schematic diagram illustrating an exemplary structure of a system according to an embodiment of the present invention.

### Detailed Description of the Embodiments

In an embodiment of the present invention, when a receiving end of a broadcast television service, such as a mobile television receiving station, needs to receive a television program and a television program list from a program source periodically, it makes use of the absolute time of the program source end. Therefore, it is necessary for the user (e.g. the mobile television receiving station) to know the absolute time of the program source.

An embodiment of the present invention provides a method for implementing synchronization between the absolute times of a television program receiver and a program source end. The method includes: a method for propagating the absolute time of the program source end and a method for broadcasting the absolute time of a transmitting station. The time difference between the absolute time of the broadcast television program source end and the local time of the user may be updated periodically at the user side. After downloading a broadcast television program list from the program source, the user may set the time for receiving a television program accurately according to the time parameters, such as the time in the program list, the local time information of the user, and the time difference between the absolute time of the program source end and the local time of the user, in conjunction with the program information customized by the user. In this way, the power consumption of the receiving device in the user terminal may be saved.

In an embodiment of the present invention, firstly, each program source periodically transmits a timestamp (i.e. its own time information) and a program table through a television data stream to television program transmitting stations.

Each of the transmitting stations periodically broadcasts its own absolute time (i.e. its own time information), as well as the time difference information between the absolute time of each program source and the absolute time of this transmitting station. The method of broadcasting may include an hourly broadcasting. The time packet broadcasted may be the same as the time packet of the program source, or only one bit information is utilized to represent the alignment of hour time. The number of a super frame or frame may also be used to represent the hour time of the program source. When the number of a super frame or frame is used to represent the hour time, the information of year, month, day may be broadcasted, or alternatively may not be broadcasted, since the timing difference between a transmitting station and a program source does not exceed one hour in general.

When a program stream from the program source is relayed and transmitted between multiple transmitting stations, a relay station should calculate the difference between its absolute time and the absolute time of the relayed transmitting station, and add this difference value to the time difference of each program source. In other words, the relay station obtains the time difference information between the transmitting station and the program source, and then transmits the time difference information and the absolute time information of the transmitting station in the same format as mentioned above.

At the receiving end, the user receiver receives the super frames or frames transmitted periodically from the transmitting station, and determines the time difference information between the user receiver and the program source based on the time information of the transmitting station and the obtained time difference information between the transmitting station and the program source. It is necessary to determine the time difference information between each program source and the user receiver respectively because there are multiple program sources.

When the user receiver determines that it wishes to receive a program transmitted from a certain program source at a certain moment according to the received program list, the time for the user receiver to receive the program on time may be obtained by adding the time difference information between this program source and the user receiver and the time information of this program source for broadcasting the program recorded in the program list.

For example, if a program is broadcasted at 8:00 o'clock at a program source A, and the time difference between the program source A and the user receiver is 10 minutes, the user receiver may select to receive the program at 8:10, that is, when determining that the local receiving time has arrived, the user receiver will activate its receiving function, notify the user and start receiving the program. Thereby, the program receiving/transmitting synchronization between the program source and the user receiver is realized.

Hereinafter the particular implementation of a method according to an embodiment of the present invention will be described in detail with reference to the accompanying drawings.

The particular implementation of a method according to an embodiment of the present invention is shown in FIG. 2, which includes:

Step 31: At a program source end, its time information is transmitted to a first stage relay station in communication with the program source end.

That is to say, at the program source end, the absolute time information based on its clock is sent to the first stage relay station periodically or termly by broadcasting or by a predetermined transmitting manner.

That is to say, at the program source end, it is necessary to send its own time information to the transmitting station or relay station in communication with the program source end periodically or termly by broadcasting or by a predetermined transmitting manner.

Step 32: the first stage relay station receives the time information of the program source end, and determines the time difference information between the program source end and the first stage relay station.

The first stage relay station may communicate with multiple program sources. In this case, the first stage relay station has to calculate and record the time difference information with different program sources respectively. For example, the multiple program sources and their corresponding time difference information may be differentiated by using different program source identifications, or alternatively, the time difference information of the program sources may be differentiated and saved by use of other approaches.

Step 33: the first stage relay station transmits the determined time difference information between the program source end and the first stage relay station, as well as its own time information, to the second stage relay station.

Step 34: the second stage relay station receives the time difference information and time information transmitted from the first stage relay station, and determines the time difference information between the second stage relay station and the program source according to the received information.

Step 35: the second stage relay station transmits the determined time difference information between the second stage relay station and the program source, together with its own time information, to the transmitting station which is in direct communication with the receiving end.

Step 36: the transmitting station in direct communication with the receiving end receives the time difference information and time information transmitted from the second stage relay station, and determines the time difference information between the transmitting station and the program source based on the received information.

In the step 34 to step 36, the transmitting station or the relay station may carry its corresponding time difference information and time information uniformly or respectively in frames or super frames transmitted by the transmitting station or the relay station, and transmit the frames or super frames to the transmitting station or the receiving end. It should be noted that, besides the time difference information transmitted by the transmitting station or the relay station, the information of the program source end, which corresponds to the time difference information and may be identified by the receiving end or the next stage transmitting station, should also be contained in the frames. That is, it should be ensured that the receiving end or the transmitting station may determine the received time difference information and the information of the corresponding program source end. Specifically, the identification information of the program source and the corresponding time difference information may be carried in the transmitted frames respectively, or it may be predefined that the time difference information of a fixed program source may be placed in a fixed position in a frame, and so on.

In addition, it should also be noted that, a transmitting station in an embodiment of the present invention may act as a relay station and a transmitting station in direct communication with the user at the same time. As a relay station, the transmitting station transmits the information to another transmitting station; while as a transmitting station in direct communication with the user, the transmitting station transmits the information to the user of a receiving end.

Step 37: the transmitting station in direct communication with the receiving end transmits the calculated time difference information and its own time information to the receiving end.

Step 38: the receiving end receives the time difference information and the time information, calculates the time difference information between the receiving end and the program source end based on the received information, and implements synchronization between the receiving end and the program source end based on the calculated time difference information.

It is necessary to transmit the program list containing the program names and the corresponding broadcasting time information from the program source end to the transmitting station periodically or termly, and then to the receiving end through the transmitting station, so that the receiving end may learn the program broadcasting time information.

In this way, the receiving end may calculate the time difference information between the received time information of the transmitting station and that of the receiving end, and determine the time difference information between the receiving end and the program source end based on the calculated time difference information between the receiving end and the transmitting station, as well as the time difference information between the program source end and the transmitting station. Then the receiving end may receive the broadcast television service information transmitted from the program source end on time according to the time difference information between the receiving end and the program source end as well as the received program list of the program source.

In FIG.2, there may be more relay stations between the first stage relay station and the transmitting station in direct communication with the receiving end, and the calculation process is similar to the above. That is, each of the relay stations calculates the time difference information between itself and the program source end respectively, then transmits its own time information and the calculated time difference information to the next relay station or the transmitting station in direct communication with the receiving end.

Since the time delay of multiple relays will not exceed tens of minutes, a 12-bit time difference which is of the level of seconds may be used to represent the time difference information. Of course, the number of bits representing the time difference may be increased during the practical application, if it is not sufficient.

It could be seen from the above description that, the specific implementation of the method according to an embodiment of the invention mainly includes: a process of the program source end transmitting its own time information and the program list, and a process of the transmitting station broadcasting its own time information and the time difference between the transmitting station and the program source end. Hereinafter these two processes will be described in detail.

(1) The program source end transmits a timestamp (i.e. its own time information) and a program list to the transmitting station.

Each program source end periodically transmits the timestamp and the program table in the television data streams to the transmitting station. The timestamp may have different precisions, in short, the precision of the timestamp may be at the second's level, since a second-level precision is not significant to the power consumption of the receiver.

In general, since the bandwidth between the program source end and the transmitting station is relatively sufficient, the timestamp may be transmitted with the format as shown in the following table. Further, considering the crystal oscillator of the program source has a certain precision (e.g. ±20ppm), the timestamp may be transmitted once per hour. Alternatively, the transmitting period may be longer or shorter. The timestamp may be expressed by Greenwich Time, as shown in the following table:

| | | | | | |
|---|---|---|---|---|---|
| Four decimal digits representing year | Two decimal digits representing month | Two decimal digits representing day | Two decimal digits representing hour | Two decimal digits representing minute | Two decimal digits representing second |

In general, the program list is customized by the program source end by using the format as shown in the following table. The length of the program list is determined by the program source end. The program list may be broadcasted periodically, for example, on the hour. The program list may be transmitted once per hour, or once every several hours. The specific transmitting manner may be predefined, or may be a broadcasting manner. The specific format of the program list is shown in the following table:

| Greenwich Time (the format is same as above) | Program name |
|---|---|
| Greenwich Time | Program name |
| Greenwich Time | Program name |
| Greenwich Time | Program name |
| Greenwich Time | Program name |

The program list and the timestamp may be transmitted simultaneously or separately, and their respective specific formats may be changed diversely.

(2) The transmitting station periodically broadcasts its absolute time, as well as the time difference information between the absolute time of each program source and the absolute time of the transmitting station.

The transmitting station periodically broadcasts its own absolute time. The method of broadcasting may include an hourly broadcasting. The time packet broadcasted may be the same as the time packet of the program source, or only one bit information is utilized to represent the alignment of hour time. The number of a super frame or frame may also be used to represent the hour time of the program source. For example, when the number of a super frame or frame number is used to represent the hour time, the information of year, month, day may be broadcasted, or alternatively is not broadcast, since the timing difference between a transmitting station and a program source does not exceed one hour in general.

On receiving an absolute time packet of a program source end, the transmitting station calculates the time difference information between its own absolute time and the absolute time of the program source end, and broadcasts the time difference between the absolute time of each program source and its own absolute time on the next hour time. The range of the time difference may be ± 1 hour, and the precision may be 1 second. The channel for transmitting the time difference may be a broadcast channel of the transmitting station, for example, in each hour-time frame or super frame. The format for transmitting the information is shown in the following table:

| | |
|---|---|
| Program source number 12bits | Time difference 12bits |

This format may express a time difference ranging from -2048 seconds to 2047 seconds.

The transmitting format as shown above may also be compressed, so that the absolute time difference will not occupy too many transmission bits. For example, the program source number may be omitted, while the position for a time difference bits may be used to represent the program source number corresponding to this time difference. The specific format is shown in the following format:

| | | | |
|---|---|---|---|
| Time difference 1 (12 bits) | Time difference 2 (12 bits) | | Time difference n (12 bits) |

Further, the time difference information corresponding to different program sources may be placed in an one-to-one or one-to-multiple manner into hour-time frames or super frames according to the order of numbers, so as to avoid too many bits of time difference, which affects the transmission of other information (e.g. video data streams), to be transmitted on the hour-time frames or super frames of the transmitting station. The specific format is shown in the following table:

| | | | | |
|---|---|---|---|---|
| Time difference 1 (12 bits) | Hour-time super frame 1 | | Time difference n (12 bits) | Hour-time super frame n |

In summary, the time difference information should be transmitted to the receiving end. The frame format for bearing the time difference information may be changed flexibly and diversely, as long as the receiving end may identify the program source information corresponding to the time difference information.

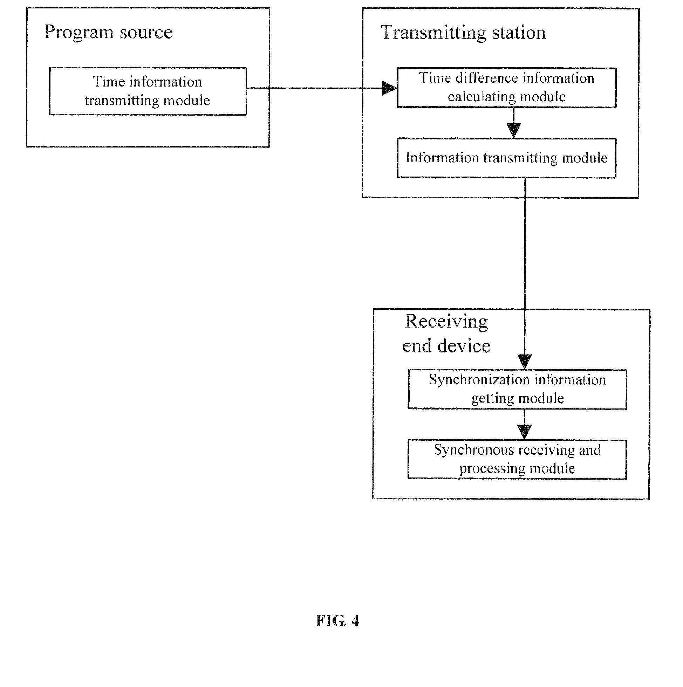

An embodiment of the present invention provides a system. In this system, a receiving end may accurately learn the time for receiving program information transmitted from a program source end, thereby the synchronization between the program source end and the receiving end is realized. The structure of the system is shown in FIG.4 which illustrates only a simplified system. In actual application, however, this system may include multiple program source ends, multiple transmitting stations and multiple receiving ends.

The program source end includes:
a time information transmitting module which is adapted to transmit the current time information of the program source to each transmitting station periodically or termly.

The transmitting station includes:
a time difference information calculating module which is adapted to calculate the time difference information between the program source and the transmitting station based on the received time information or time difference information transmitted from the program source or a relay station;
an information transmitting module which is adapted to transmit the current time information of the transmitting station and the time difference information calculated by the time difference information calculating module to other transmitting station or the receiving end.

The receiving end device includes:
a synchronization information obtaining module which is adapted to calculate and determine the time difference information between the program source and the receiving end, based on the received time difference information between the program source and the transmitting station, as well as the time information of the transmitting station;
a synchronous receiving and processing module which is adapted to determine the time of the receiving end for receiving a broadcast television service transmitted by the program source based on the time difference information between the program source and the receiving end determined by the synchronization information getting module, and turn on and notify a user to watch the television program when determining an arrival receiving time.

The specific functions of all the modules have been described in detail in the embodiments described above, and will not be repeated here.

While the present invention has been illustrated and described with reference to some preferred embodiments, the present invention should not be limited to these. Those skilled in the art should recognize that various variations and modifications could be made without departing from the spirit and scope of the present invention as defined by the accompanying claims. The protection scope of the present invention should be based on the protection scope of the claims.

## Claims

1. A method for implementing synchronization between a receiving end and a source end of a service, applicable to a service transmission network comprising the source end, a relay transmitting end and the receiving end, comprising:
determining time difference information between the source end and the relay transmitting end at the relay transmitting end;
transmitting, by the relay transmitting end, time information of the relay transmitting end and the time difference information to the receiving end;
implementing, by the receiving end, synchronization between the receiving end and the source end according to the time difference information and the time information of the relay transmitting end.

2. The method according to claim 1, wherein when the relay transmitting end comprises two or more relay transmitting ends, each of the relay transmitting ends which are not in direct communication with the service receiving end needs to determine the time difference information between itself and the source end, according to time information and time difference information transmitted from a last stage relay transmitting end.

3. A method for implementing synchronization between a receiving end and a source end of a broadcast television service, a broadcast television service transmission network in which the method is applied comprises the program source end, a transmitting station and the receiving end, wherein the method comprisescomprising:
A. determining time difference information between the program source end and the transmitting station_{;}
B. transmitting, by the transmitting station, time information of the transmitting station and the time difference information to the receiving end;
C. implementing, by the receiving end, synchronization between the receiving end and the program source end according to the time difference information and the time information of the transmitting station.

4. The method according to claim 3, wherein the step A comprises:
a1. transmitting, by the program source end, time information of the program source end to the transmitting station;
a2. calculating, by the transmitting station, the time difference information between the transmitting station and the program source end according to the time information of the program source end.

5. The method according to claim 3, wherein the transmitting station is in direct communication with the receiving end.

6. The method according to claim 3, wherein the program source end communicates with the transmitting station via at least one relay station.

7. The method according to claim 6, wherein determining time difference information between the program source end and the transmitting station at the transmitting station comprises:
transmitting, by the program source end, time information of the program source end to the relay station;
calculating, by the relay station, time difference information between the relay station and the program source end according to the time information of the program source end;
transmitting, by the relay station, the time difference information between the relay station and the program source end as well as the time information of the relay station to the transmitting station in direct communication with the receiving end;
calculating, by the transmitting station in direct communication with the receiving end, the time difference information between the program source end and the transmitting station according to the received time difference information between the relay station and the program source end and the time information of the relay station.

8. The method according to claim 6, wherein the program source end communicates with the transmitting station via multiple stages of relay stations, and determining the time difference information between the program source end and the transmitting station comprises:
transmitting, by the program source end, time information of the program source end to a first stage relay station;
calculating, by the first stage relay station, time difference information between the first stage relay station and the program source end according to the time information of the program source end;
transmitting, by the first stage relay station, the time difference information between the first stage relay station and the program source end and time information of the first stage relay station to a second stage relay station, and calculating, by the second stage relay station, time difference information between the second stage relay station and the program source end according to the time difference information between the first stage relay station and the program source end and the time information of the first stage relay station, and repeating the transmitting and calculating for the rest stages of relay stations;
calculating, by the transmitting station in direct communication with the receiving end, the time difference information between the program source end and the transmitting station according to received time difference information between a relay station connected with the transmitting station and the program source, as well as the time information of the relay station.

9. The method according to any one of claims 3 to 8, wherein determining the time difference information between the program source end and the transmitting station comprises:
transmitting, by the program source end, time information of the program source end to the transmitting end in direct communication with the receiving end or a relay station by way of broadcasting or a predetermined transmitting approach periodically;
carrying, by the relay station or the transmitting station, time difference information between the relay station or the transmitting station and the program source end as well as time information of the relay station or the transmitting station in a frame or super frame to be transmitted, and transmitting the frame or super frames to a relay station, the transmitting station in direct communication with the receiving end or the receiving end.

10. The method according to claim 9, wherein
the time difference information is carried in different frames or super frames respectively.

11. The method according to claim 9, wherein
the program source end transmits a program list containing program names and corresponding broadcasting time information to the transmitting station in direct communication with the receiving end or the relay station periodically.

12. The method according to claim 10, wherein the method further comprises:the time information transmitted from the program source end to the transmitting station in direct communication with the receiving end or a relay station, as well as the time information transmitted from the transmitting station to the receiving end comprise:
time information of current year, month, day, minute and second of the program source end or the transmitting station, or part of the time information of current year, month, day, minute and second.

13. The method according to any one of claims 3 to 8, wherein the step C comprises:
c1. calculating, by the receiving end, time difference information between the time information of the transmitting station and time information of the receiving end;
c2. determining time difference information between the receiving end and the program source end according to the calculated time difference information between the receiving end and the transmitting station, as well as the time difference information between the program source end and the transmitting station;
c3. receiving broadcast television service information transmitted from the program source end according to the time difference information between the receiving end and the program source end.

14. A program source, comprising:
a time information transmitting module, adapted to transmit current time information of the program source to each transmitting station periodically.

15. A transmitting station, comprising:
a time difference information calculating module, adapted to calculate time difference information between a program source and the transmitting station based on time information or time difference information transmitted from the program source or another transmitting station;
an information transmitting module, adapted to transmit current time information of the transmitting station and the time difference information calculated by the time difference information calculating module to other transmitting station or a receiving end.

16. A receiving end device, comprising:
a synchronization information obtaining module, adapted to calculate and determine time difference information between a program source and the receiving end, based on time difference information between the program source and a transmitting station, as well as time information of the transmitting station;
a synchronous receiving and processing module, adapted to determine time of the receiving end for receiving a broadcast television service transmitted by the program source based on the time difference information between the program source and the receiving end determined by the synchronization information getting module.

17. A system for broadcast television service comprising a receiving end, a source end, and a transmitting station, wherein the receiving end and the source end are synchronous with each other,
the program source end comprises:
a time information transmitting module, adapted to transmit current time information of the source end to the transmitting station periodically;
the transmitting station comprises:
a time difference information calculating module, adapted to calculate time difference information between the source end and the transmitting station based on time information or time difference information transmitted from the source end or a relay station;
an information transmitting module, adapted to transmit current time information of the transmitting station and the time difference information calculated by the time difference information calculating module to other transmitting station or the receiving end;
the receiving end device comprises:
a synchronization information obtaining module, adapted to calculate and determine time difference information between the source end and the receiving end, based on time difference information between the source end and the transmitting station, as well as time information of the transmitting station;
a synchronous receiving and processing module, adapted to determine time of the receiving end for receiving a broadcast television service transmitted by the source end based on the time difference information between the source end and the receiving end determined by the synchronization information getting module.
